## Europäisches Patentamt
## European Patent Office
## Office européen des brevets

(11) Veröffentlichungsnummer: **0 245 725 B1**

(12) **EUROPÄISCHE PATENTSCHRIFT**

(45) Veröffentlichungstag der Patentschrift: 26.06.91

(51) Int. Cl.⁵: **C08F 283/01**, C08F 283/02, C09D 167/00

(21) Anmeldenummer: 87106358.2

(22) Anmeldetag: 30.04.87

Die Akte enthält technische Angaben, die nach dem Eingang der Anmeldung eingereicht wurden und die nicht in dieser Patentschrift enthalten sind.

(54) **Verfahren zur Herstellung von wärmehärtbaren wasserverdünnbaren Lackbindemitteln.**

(30) Priorität: 07.05.86 AT 1219/86

(43) Veröffentlichungstag der Anmeldung:
19.11.87 Patentblatt 87/47

(45) Bekanntmachung des Hinweises auf die Patenterteilung:
26.06.91 Patentblatt 91/26

(84) Benannte Vertragsstaaten:
DE ES FR GB IT NL SE

(56) Entgegenhaltungen:
EP-A- 0 101 838
GB-A- 1 217 244

CHEMICAL ABSTRACTS, Band 77, Nr. 6, 7. August 1972, Zusammenfassung Nr. 35547a, Seite 45, Columbus, Ohio, US

(73) Patentinhaber: Vianova Kunstharz Aktiengesellschaft

A-8402 Werndorf(AT)

(72) Erfinder: Hiden, Hans
Corneliusweg 18
A-8042 Graz(AT)
Erfinder: Behmel, Lukas Klaus, Dr.
Wenisbucherstrasse 66
A-8044 Graz(AT)
Erfinder: Tulacs, Laszlo, Dipl.-Ing.
Münzgrabengürtel 21
A-8010 Graz(AT)
Erfinder: Luttenberger, Johann
Haferfeldweg 14
A-8053 Graz(AT)

## Beschreibung

Die vorliegende Erfindung betrifft ein Verfahren zur Herstellung von wärmehärtbaren, wasserverdünnbaren Lackbindemitteln durch Lösungspolymerisation von α,β-ethylenisch ungesättigten Monomeren im Schoße einer Lösung eines Phosphorsäuregruppen aufweisenden Polyesterharzes.

Mit dem Begriff Schoßpolymerisation wird ein Verfahren bezeichnet, bei welchem die Copolymerisation α,β-ethylenisch ungesättigter Monomerer in Gegenwart eines in organischen Lösungsmitteln gelösten Polymeren erfolgt.

Produkte dieser Art sind beispielsweise aus der AT-PS 377 999 bekannt. Gemäß dieser Literaturstelle werden in einer ersten Stufe die Monomeren für eine erste Copolymerlösung (A) in üblicher Weise durch radikalische Polymerisation in organischen Lösungsmitteln bis zu einem Polymerisationsumsatz von mindestens 80 %, vorzugsweise von über 90 % polymerisiert und anschließend in der erhaltenen Polymerlösung in einer zweiten Stufe eine weitere Polymerlösung aus den für das Copolymer (B) vorgesehenen Monomeren durch radikalische Polymerisation hergestellt, wobei die Auswahl der Monomeren für die einzelnen Polymerkomponenten so getroffen wird, daß diese bezüglich ihrer Monomerenzusammensetzung und/oder ihres Molekulargewichtes bzw. ihrer Grenzviskositätzahlen und/oder ihrer Löslichkeitsparameter und/oder ihrer Glasübergangstemperatur soweit unterschiedlich sind, daß sie eine Unverträglichkeit in dem Sinne aufweisen, daß im Falle einer getrennten Herstellung der Komponenten deren Mischung ein Zweiphasensystem ausbilden.

Auf diese Weise ist es möglich, Bindemittelkomponenten mit wesentlich verschiedener Charakteristik in einer Kombination zu vereinen, ohne daß sich verarbeitungsmäßige Schwierigkeiten, wie Phasentrennung, erhöhter Lösungsmittelbedarf oder Unverträglichkeit im Lackfilm ergeben.

Es wurde nun gefunden, daß nach dem Verfahren der Schoßpolymerisation, nach partieller oder vollständiger Neutralisation mit Basen, wasserverdünnbare Produkte mit besonders günstigen Eigenschaften erhalten werden, wenn man als gelöstes Polymeres ein Phosphorsäuregruppen aufweisendes, vorzugsweise gesättigtes Polyesterharz einsetzt.

Phosphorsäuremodifizierte Polyesterharze und deren Herstellung werden beispielsweise in der EP-B1-01 01 838 bzw. der DE-OS 22 04 844, der GB-PS 1,377,854 oder den US-PSS 3,415,766 und 3,574,566 beschrieben. Für das vorliegende Verfahren werden phosphorsäuremodifizierte Polyesterharze bevorzugt, bei denen die Phosphorsäurekomponente weitgehend chemisch in das Polyestermoleküleingebaut ist, da auf diese Weise aus den Bindemitteln störungsfreie Lacke erhalten werden.

Die vorliegende Erfindung betrifft demgemäß ein Verfahren zur Herstellung von wärmehärtbaren, nach partieller oder vollständiger Neutralisation der Säuregruppen mit Basen, wasserverdünnbaren Lackbindemitteln durch Schoßpolymerisation von α,β-ethylenisch ungesättigten Monomeren, welches dadurch gekennzeichnet ist, daß man die Copolymerisation der Monomeren in einer Lösung in wasserverträglichen organischen Lösungsmitteln eines vorzugsweise gesättigten Polyesterharzes, welches mindestens 0,1 Mol, vorzugsweise 0,3 bis 1,5 Mol, Phosphor pro 1000 g der Komponente in Form von weitgehend esterartig gebundenen Phosphorsäuren enthält, wobei im Polyesterharz der im nichtneutralisierten Zustand mit Wasser nicht extrahierbare molare Anteil an Phosphor mindestens 50 %, vorzugsweise mindestens 70 %, beträgt und/oder der Umsatz (p) bei der Veresterung sämtlicher Säuregruppen 70 %, vorzugsweise 80 %, überschreitet, durchführt.

Die Erfindung betrifft weiterhin die nach diesem Verfahren hergestellten Bindemittel sowie die Verwendung der Bindemittel in wasserverdünnbaren Lackzusammensetzungen.

Die nach dem erfindungsgemäßen Verfahren hergestellten Bindemittel zeichnen sich durch sehr gute Pigmentbenetzung aus. Die auf Basis dieser Bindemittel hergestellten Lacke zeigen hohen Glanz und ausgezeichnete Haftfestigkeit auf den in der Industrie gebräuchlichen Metallsubstraten. Durch die Phosphorsäuregruppen wird überdies die Reaktion mit den Vernetzungskomponenten, wie den handelsüblichen Aminoharzen in augenscheinlicher Weise katalysiert.

Die Bindemittel können daher zur Formulierung von wasserverdünnbaren, ofentrocknenden Industrielacken, Automobiliserenlacken, Coil-Coating-Lacken u. ä. Einsatzzwecken eingesetzt werden.

Vorzugsweise werden die Lackbinde mittel für die Formulierung von wasserverdünnbaren Decklacken und Basislacken für zweischichtdecklacke verwendet. Besonders bevorzugt werden die Lackbindemittel in Kombination mit Polymerdispersionen für die Formulierung von Basislacken für zweischichtdecklacke verwendet.

Für die Herstellung der Polyesterkomponente können prinzipiell alle Polykondensationsverfahren benutzt werden, soferne die anspruchgemäß geforderte chemische Bindung der Phosphorverbindung gegeben ist.

In vorteilhafter Weise kann nach dem EP-B1-0101 838 gearbeitet werden. Gemäß dieser Patentsschrift werden Phosphorsäuregruppen enthaltende Polyesterharze unter praktische vollständiger Bindung der eingesetzten Phosphorsäure(derivate) in der Weise hergestellt, daß man die Veresterungsreaktion in einer 40 bis 80 Gew.-% Feststoff enthaltenden Lösung in inerten Lösemitteln durchführt. Bezüglich der Einzelheiten wird auf die obengenannte Patentschrift verwiesen.

Für die erfindungsgemäß eingesetzten phosphorsäuremodifizierten Polyester, welche vorzugsweise einen Gehalt von 0,3 bis 1,5 Mol Phosphor pro 1000 g der Komponente in Form weitgehend esterartig gebundener Phosphorsäuren aufweisen, muß der im nicht neutralisierten Zustand mit Wasser nicht extrahierbare Anteil an Phosphor bzw. der Umsatz (p) bei der Veresterung sämtlicher Säuregruppen mindestens 70 %, vorzugsweise über 80 % betragen. Bei der Berechnung von p werden alle bei der Herstellung des Polyesters zur Ausbildung von Esterbildungen befähigten Gruppen berücksichtigt.

Unter dem Begriff "Polyester" werden sowohl Polyester im engeren Sinne als auch mit nichttrocknenden Ölen oder Fettsäuren modifizierte Produkte (Alkydharze) verstanden. Für das erfindungsgemäße Verfahren werden vorzugsweise solche Polyester eingesetzt, welche weitgehend oder vollständig frei von olefinischen Doppelbindungen sind. Die für das diese Produkte einsetzbaren Rohstoffe sind dem Fachmann bekannt und werden in vielen Fachbüchern, beispielsweise in K. WINNACKER und L. KÜCHLER "Chemische Technologie" (C. Hanser Verlag, München 1972) oder in ULLMANNS ENCYKLOPÄDIE DER TECHNISCHEN CHEMIE, 4. Auflage, Band 15 Verlag Chemie GmbH, Weinheim 1978 beschrieben.

Zur Einführung der Phosphorsäuregruppen dienen bevorzugt Polyphosphorsäuren z. B. der allgemeinen Formel $H_{n+2}P_nO_{3n+1}$ mit 3 oder mehr Phosphoratomen im Molekül und P-O-P-Bindungen. Diese Säuren liegen üblicherweise in technisch anfallenden Mischungen mit einem $P_4O_{10}$-Gehalt zwischen etwa 70 und 90 % vor. Daneben können auch die handelsüblichen Gemische aus Mono- und Diestern, wie sie z. B. durch Umsetzung von Diphosphorpentoxid mit ein- oder mehrwertigen Alkoholen erhalten werden, eingesetzt werden. Diese Estergemische enthalten üblicherweise Anteile freier Phosphorsäuren.

Die Formulierung der Ansätze erfolgt nach den gleichen allgemeinen Prinzipien, wie sie dem Fachmann aus der Herstellung phosphorsäurefreier Polyester bekannt und beispielsweise bei H.G. ELIAS, "Makromoleküle" (HÜTHIG und WEPF, Basel-Heidelberg 1971) beschrieben sind.

Als inerte Verdünnungsmittel werden Produkte eingesetzt, die unter den Bedingungen des erfindungsgemäßen Verfahrens praktisch keine chemischen Reaktionen zeigen. Günstig sind dabei Verdünnungsmittel, die mit Wasser nicht oder nur in geringem Ausmaß mischbar sind, wie beispielsweise Toluol, Xylol oder seine höheren Homologen, die die Abtrennung des bei der Herstellung der Polyester gebildeten Wassers durch Anwendung eines Kreislaufverfahrens erleichtern.

Die Polyester werden nach der Fertigstellung, gegebenenfalls nach Entfernung des nichtwasserlöslichen Lösungsmittels, mit einem wassertoleranten Lösungsmittel, z. B. einem Glykolether, wie Ethylenglykolmonoethyl- oder butylether, vorzugsweise einem der toxikologisch unbedenklicheren Propylenglykolether, wie Methoxypropanol, gelöst und gegebenenfalls entsprechend der Säurezahl teilweise oder weitgehend mit Alkyl- oder Alkanolaminen, beispielsweise Dimethylethanolamin, oder auch anderen Aminen, wie N-Methylmorpholin neutralisiert. Die Neutralisation kann bei Verwendung aprotischer, wassertoleranter Lösemittel entfallen.

Für das vorliegende Verfahren können je nach dem späteren Einsatzzweck des Lackbindemittels Polyester mit verschiedenen Phosphorsäuregehalten und Grenzviskositätszahlen eingestzt werden. Im allgemeinen liegt der Phosphorgehalt zwischen 0,3 bis 1,5 Mol Phosphor pro 1000 g des Polyesters, die Grenzviskositätszahl in Dimethylformamid beträgt zwischen 3 und 25 ml/g/20° C, wobei für den Einsatz als Bindemittel für Decklacke, einschließlich Basislacke für Zweischichtdecklacke der untere bis mittlere Bereich (3 bis 15 ml/g) bevorzugt wird, während für den Einsatz in Füllerförmuliérungen und anodisch abscheidbaren Elektrotauchlacken auch der obere Bereich dieser Parameter in Frage kommt.

Die Monomerenzusammensetzung für das im Schoße des Polyesters hergestellte Copolymerisat richtet sich nach dem späteren Verwendungszweck des Bindemittels. Zur Abstimmung des Verdünnungsverhaltens enthält das Copolymere vorzugsweise einen Anteil von 3 bis 10 Gew.-% (bezogen auf die Menge der eingesetzten Monomeren) einer α.β-ethylenisch ungesättigten Carbonsäure. Als solche werden (Meth)-acrylsäure, Maleinsäure oder Halbester der Maleinsäure verwendet. Durch geeignete Auswahl der Monomeren können sowohl fremdvernetzende als auch selbstvernetzende Bindemittel erhalten werden. Die Formulierung der entsprechenden Monomerenzusammensetzungen ist dem Fachmann bekannt und bedarf keiner weiteren Erläuterung. Vorzugsweise liegt die Monomerenzusammensetzung innerhalb der nachfolgend angegebenen Grenzen:

| | |
|---|---|
| α,ß-ethylenisch ungesättigte Säure | 0 - 10 Gew.-% |
| (Meth)acrylsäurealkylester | 15 - 90 Gew.-% |
| (Meth)acrylamide oder dessen gegebenenfalls mit Alkanolen veretherte ·Formaldehydanlagerungsprodukte | 0 - 30 Gew.-% |
| (Meth)acrylsäurehydroxyalkylester | 0 - 30 Gew.-% |
| andere Monomere, vorzugsweise Vinylaromaten | 5 - 40 Gew.-% |

Bei der Auswahl der Monomeren bzw. der Polyesterkomponente ist darauf zu achten, daß unter den Herstellungsbedingungen nicht mehr als 5 % der vorhandenen funktionellen Gruppen zu einer Verknüpfung der beiden Polymerkomponenten führen können.

Die Mengenverhältnisse zwischen der Polyesterkomponente und der Summe der Monomeren können zwischen 80 : 20 und 20 : 80 liegen.

Für die Durchführung des erfindungsgemäßen Verfahrens wird die Lösung des gegebenenfalls partielle oder weitgehend neutralisierten und vorteilhafterweise bereits in einem dem späteren Verwendungszweck angepaßten Lösungsmittel gelösten Polyesterharzes im Reaktionsgefäß vorgelegt und die Mischung der Monomeren. Initiatoren und gegebenenfalls Regler bei der Reaktionstemperatur gleichmäßig zugegeben. Vorzugsweise erfolgt die Zugabe in einer Weise, bei welcher zu jedem Zeitpunkt ein Minimum an Monomeren im Reaktionsgemisch vorliegt. Ein solches Verfahren ist in der AT-PS 367 436 beschrieben. Zur Vermeidung von Verfärbungen werden vorzugsweise Azoverbindungen, wie Azodiisobutyronitril, als Initiatoren eingesetzt.

Die Schoßpolymeren weisen eine Gesamtsäurezahl zwischen 25 und 80 mg KOH/g auf und haben vorzugsweise eine Grenzviskositätszahl zwischen 15 und 45 ml/g (gemessen in Chloroform bei 20°C).

Die erfindungsgemäß hergestellten Bindemittel werden in üblicher Weise zu Lacken verarbeitet. Sie können sowohl als Klarlack als auch in pigmentierter Form, gegebenenfalls in Kombination mit anderen Lackbindemitteln, wie Polymerdispersionen und/oder Vernetzungskomponenten für verschiedenste Verwendungszwecke formuliert werden. Die Applikation kann durch Spritzverfahren (Luft- oder elektrostatische Verfahren), Walzen (Coil-coating) oder durch elektrische Abscheidung (A-ETL = anodische Elektrotauchlakkierung) erfolgen.

Die Lacke werden bei erhöhter Temperatur gehärtet, wobei je nach Formulierung eine Temperatur ab 100°C angewendet wird.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Herstellung der in den Beispielen eingestzten Phosphorsäuregruppen tragenden Polyestér

PE 1 : In einer Universal-Kunstharzanlage werden 11 Tle Trimethylolpropan (TMP), 64 Tle Neopentylglykol, 5 Tle Adipinsäure und 70 Tle Tetrahydrophthalsäureanhydrid bei 120 bis 140°C aufgeschmolzen. Nach Zugabe von 9 Tlen Polyphosphorsäure ($P_4O_{10}$-Gehalt 84 %) wird die Temperatur auf 200°C erhöht und unter Verwendung von Toluol als Schleppmittel verestert, bis die unten angegebenen Endwerte erreicht sind. Das Reaktionsprodukt wird mit Diethylenglykoldimethylether auf einen Festkörpergehalt von 85 % verdünnt.

```
Endwerte:  Grenzviskositätszahl :  7,4 ml/g (CHCl₃, 20°C)
           Säurezahl            :  34,1 mg KOH/g

Kenndaten: P-Gehalt             :  0,74 Mol/kg
           % P nicht extrahier-
                         bar     :  86
           Umsatz (p)            :  93 %
```

PE 2 : In gleicher Weise wird eine Polyesterlösung aus 11 Tlen TMP, 64 Tlen Neopentylglykol, 5 Tlen Adipinsäure, 65 Tlen Tetrahydrophthalsäureanhydrid und 12 Tlen Polyphosphorsäure ($P_4O_{10}$-Gehalt 84 %) hergestellt.

```
Endwerte:  Grenzviskositätszahl :  8,8 ml/g (CHCl₃, 20°C)
           Säurezahl            :  32 mg KOH/g
Kenndaten: P-Gehalt             :  0,98 Mol/kg
           % P nicht extrahier-
                         bar     :  77
           Umsatz (p)            :  94 %
```

Beispiel 1: In einem mit Rührer, Thermometer und Zugabegefäßen ausgestatteten Reaktionsgefäß werden 117,5 Tle (100 Tle Festharz) der Polyesterlösung PE 1 mit Methoxypropanol (MOP) auf einen Festkörpergehalt von 46,5 % verdünnt, mit Dimethylethanolamin (DMEA), bezogen auf die gefundene Säurezahl, vollständig neutralisiert und auf 112°C erwärmt. Innerhalb von 5 Stunden wird bei 112 bis 115°C eine Mischung aus 20 Tlen einer 50%igen butanolischen Lösung von N-Butoxymethylmethacrylamid, 5 Tlen Acrylsäure, 25 Tlen p-Methylstyrol und 60 Tlen Ethylacrylat sowie 0,9 Tlen Azodiisobuttersäuredinitril kontinuierlich zugegeben. Die Reaktionstemperatur wird weiter gehalten, bis, gegebenenfalls nach weiteren Zugaben von Initiator, ein Polymerisationsumsatz von praktisch 100 % erreicht ist.

Die Berechnung des Polymerisationsumsatzes erfolgt aufgrund der Bestimmung des Festkörpergehaltes nach der Formel

$$PU\ (\%) = \frac{(a \times b)}{100} - d \times \frac{100}{c}$$

wobei

a = ermittelter Festkörpergehalt (%)
b = Gesamtmasse im Reaktionsgefäß (g)
c = Monomerenanteil
d = Polyesterharzanteil (Festharz)

bedeutet.

Nach Beendigung der Polymerisation wird der Ansatz mit MOP auf einen Festkörpergehalt von 60 % verdünnt. Die Bindemittellösung weist eine Säurezahl von 34 mg KOH/g und eine Grenzviskositätszahl von 17,5 ml/g (CHCl₃, 20°C) auf. Das Verhältnis von Polyester zu Copolymer beträgt 1 : 1. Das Bindemittel ist nach Zusatz von 4,3 Tlen Dimethylethanolamin pro 100 g Festharz mit Wasser unbegrenzt verdünnbar.

Das gemäß Beispiel 1 hergestellte Produkt wird in folgender Formulierung für einen wasserverdünnbaren Basislack, weiß, eingesetzt:

| | | |
|---|---|---|
| 17,0 | Tle | Polymer gemäß Beispiel 1 / 60 % MOP |
| 5,4 | Tle | Methoxypropanol (MOP) |
| 4,0 | Tle | Diethylenglykolmonobutylether |
| 0,4 | Tle | Dimethylethanolamin |
| 27,7 | Tle | $TiO_2$-Rutil-Pigment |
| 0,2 | Tle | Nichtionisches Netzmittel / 50%ig |
| 0,2 | Tle | Antiabsetzmittel / 50%ig |
| 5,0 | Tle | Hexamethoxymethylmelamin /60%ig |
| 0,4 | Tle | Silikonfreier Entschäumer |
| 11,5 | Tle | Polymerdispersion / 46%ig    (1) |
| 0,1 | Tl | Siliconhältiges Verlaufmittel |
| 28,1 | Tle | Wasser, deionisiert |

-----------------------------------------------------------------

100,0

(1) Mittelviskose, feinteilige Acrylester-Copolymer-dispersion mit einer Mindestfilmbildungstemperatur von ca. 40°C.

Der Lack wird mit einer Trockenfilmstärke von ca. 25 μm aufgebracht und kann nach forcierter Trocknung (5 min./60°C) mit einem lösungsmittelhältigen Klarlack übersprizt werden.

Beispiel 2: Wie im Beispiel 1 beschrieben, werden 35,3 Tle (30 Tle Festharz) der Polyesterlösung PE 1 mit MOP auf einen Festkörpergehalt von 42,2 % verdünnt, mit Dimethylethanolamin, bezogen auf die gefundene Säurezahl, vollständig neutralisiert und auf 110°C erwärmt. Innerhalb von 5 Stunden wird bei 110 bis 112°C eine Mischung auf 14 Tlen einer 50%igen butanolischen Lösung von N-Butoxymethylacrylamid, 3 Tlen Acrylsäure, 1 Tl Methacrylsäure, 16 Tlen Styrol, 40 Tlen Ethylacrylat und 3 Tlen Methylmethacrylat, sowie 0,9 Tlen Azodiisobuttersäuredinitril kontinuierlich zugegeben. Nach Erreichen eines Polymerisationsumsatzes von praktisch 100 % weist das Bindemittel einen Festkörpergehalt von ca. 70 %, eine Säurezahl von 37 mg KOH/g und eine Grenzviskositätszahl von 23,1 ml/g ($CHCl_3$, 20°C) auf. Das Verhältnis von Polyesterharz zu Copolymer beträgt 3 : 7. Das Bindemittel ist nach Neutralisation mit 5,8 Tlen Dimethylethanolamin pro 100 g Festharz mit Wasser unbegrenzt verdünnbar.

Aus dem Bindemittel wird ein anodisch abscheidbarer Klarlack folgender Zusammensetzung hergestellt:

| | | |
|---|---|---|
| 160 | Tle | Harzlösung, 70 % |
| 28,6 | Tle | wasserlösliches Melaminharz/63%ig |
| 15 | Tle | Diethylenglykolmonobutylether |
| 5 | Tle | Leinölfettsäure, neutralisiert mit DMEA |
| 3 | Tle | DMEA |

Der Ansatz wird mit deionisiertem Wasser auf einen Festkörpergehalt von 12 % verdünnt. Auf einer zinkphosphatierten Stahlblechanode elektrisch abgeschieden und 30 Minuten bei 170°C eingebrannt, ergibt sich ein klarer, farbloser Film mit guter Oberflächenhärte.

Beispiel 3: Wie im Beispiel 1 beschrieben, werden 82 Tle (70 Tle Festharz) der Polyesterlösung PE 1 mit MOP auf einen Festkörpergehalt von 55 % verdünnt, mit Dimethylethanolamin, bezogen auf die gefundene Säurezahl, vollständig neutralisiert und auf 95° C erwärmt. Innerhalb von 5 Stunden wird bei 95 bis 100° C eine Mischung aus 5,4 Tlen einer 50%igen Lösung von N-Butoxymethylmethacrylamid, 1,5 Tlen Acrylsäure, 8,8 Tlen Styrol, 1 Tl Hydroxyethylmethacrylat und 16 Tlen Ethylacrylat, sowie 0,9 Tlen Azodiisobuttersäuredinitril kontinuierlich zugegeben. Nach Erreichen eines Polymerisationsumsatzes von praktisch 100 % weist das Bindemittel einen Festkörpergehalt von 62,4 %, eine Säurezahl von 32 mg KOH/g und eine Grenzviskositätszahl von 16,6 ml/g (CHCl$_3$,20° C) auf. Das Verhältnis von Polyesterharz zu Copolymer beträgt 70 : 30. Das Bindemittel ist nach Neutralisation mit 5,0 Tlen Dimethylethanolamin pro 100 g Festharz mit Wasser unbegrenzt verdünnbar.

Das Harz wird als Bindemittel in einer wasserverdünnbaren Automobilfüllerrezeptur nachstehender Zusammensetzung geprüft:

| | | |
|---|---|---|
| 28,5 | Tle | Harzlösung 60 % MOP |
| 0,4 | Tle | DMEA |
| 7,7 | Tle | Diethylenglykolmonobutylether |
| 19,0 | Tle | Pigmente (TiO$_2$/BaSO$_4$/Ruß-1:1:0,01) |
| 3,1 | Tle | wasserverdünnbares Melaminharz, 63 % |
| 0,2 | Tle | silikonfreier Entschäumer |
| 41,1 | Tle | deionisiertes Wasser |
| ------------- | | |
| 100,0 | | |

Der Lack wird durch Spritzen auf ein mit einem kathodisch abgeschiedenen Tauchlack grundiertes Stahlblech aufgebracht und ergibt in einem Einbrennbereich von 130 bis 180° C (30 Minuten) ausgezeichnete Eigenschaften.

Beispiele 4 und 5: Wie im Beispiel 1 beschrieben werden weitere Schoßpolymerisate nach folgenden Ansätzen hergestellt:

Beispiel 4:

35,3 Tle Polyesterlösung PE 2 (30 Tle Festharz; 80 %,
bezogen auf Säurezahl, neutralisiert
mit DMEA; verdünnt auf 42,3 %
mit MOP)

Monomerenmischung:

12,4    Tle Butoxymethylacrylamid (50%ige Lösung)

3,5    Tle Acrylsäure

9,9    Tle Vinyltoluol

8,0    Tle Methylmethacrylat

20,0    Tle 2-Ethylhexylacrylat

12,0    Tle Butylacrylat

10,4    Tle Ethylacrylat

1,7    Tle Azodiisobuttersäuredinitril


Reaktionstemperatur:    105 - 108°C

Zugabezeit :    6 Stunden


Enddaten:

Festkörpergehalt    :    63,8 %

Säurezahl    :    34 mg KOH/g

Grenzviskositätszahl:    20,4 ml/g (CHCl$_3$, 20°C)

Verhältnis der Komponenten:    30 PE : 70 COP (Copolymer)

Neutralisation    :    6,9 Tle Diethanolamin pro
                                    100 g Festharz


Aus dem Harz wird wie bei Beispiel 1 ein wasserverdünnbarer Basislack formuliert. Auch in diesem Fall ist eine einwandfreie Überlackierbarkeit nach forcierter Trocknung (5 Min/60°C) gegeben.

Beispiel 5 :

47 Tle Polyesterlösung PE 2 (40 Tle Festharz;
verdünnt auf 40 % mit MOP)

Monomerenmischung :

| | | |
|---|---|---|
| 1,8 | Tle | Methacrylsäure |
| 7,2 | Tle | 2-Hydroxyethylmethacrylat |
| 4,8 | Tle | 2-Hydroxypropylacrylat |
| 12,0 | Tle | Styrol |
| 10,8 | Tle | Butylacrylat |
| 11,4 | Tle | Isobutylmethacrylat |
| 12,0 | Tle | Ethylacrylat |
| 1,8 | Tle | Dibenzoylperoxid |

| | | |
|---|---|---|
| Reaktionstemperatur | : | 102 – 105°C |
| Zugabezeit | : | 4 Stunden |

Enddaten:

| | | |
|---|---|---|
| Festkörpergehalt | : | 61,8 % |
| Säurezahl | : | 21 mg KOH/g |
| Grenzviskositätszahl | : | 16,8 ml/g (CHCl$_3$, 20°C |
| Verhältnis der Komponenten | : | 40 PE : 60 COP |
| Neutralisation: | : | 3,8 Tle Triethylamin |
| | | pro 100 g Festharz |

Aus der Harzlösung wird ein weißer Einschichtlack gemäß folgender Rezeptur hergestellt:

| | | |
|---|---|---|
| 26,0 | Tle | Harzlösung / 60 MOP |
| 0,3 | Tle | DMEA |
| 5,5 | Tle | Diethylenglykolmonobutylether |
| 16,8 | Tle | TiO$_2$ – Rutil |
| 5,8 | Tle | wasserverdünnbares Melaminharz / 63 % |
| 0,3 | Tle | nichtionisches Netzmittel |
| 0,1 | Tl | silikonhältiges Verlaufmittel |
| 1,0 | Tl | silikonfreier Entschäumer |
| 44,2 | Tle | Wasser deionisiert |

‒‒‒‒‒‒‒‒

100,0

Der Lack wurde durch Spritzen auf blankes Stahlblech aufgetragen und 30 Minuten bei 120°C eingebrannt. Der Film zeigt folgendes Eigenschaftsbild:

```
Trockenfilmstärke:.                          30 µm
Gitterschnitt (DIN 53 151):                  Kennwert O
Pendelhärte nach König (DIN 53 157):         123 Sekunden
Tiefung nach Erichsen (DIN 53 156) :         über 9 mm
Xylolbeständigkeit                      :    über 7 Minuten
```

## Ansprüche
Patentansprüche für folgende Vertragsstaaten: WB,DE,FR,GB,IT,NL,SE

1. Verfahren zur Herstellung von wärmehärtbaren, nach partieller oder vollständiger Neutralisation der Säuregruppen mit Basen, wasserverdünnbaren Lackbindemitteln durch Schoßpolymerisation von ∝ ,ß-ethylenisch ungesättigten Monomeren, dadurch gekennzeichnet, daß man die Copolymerisation der Monomeren in einer Lösung in wasserverträglichen organischen Lösungsmitteln eines vorzugsweise gesättigten Polyesterharzes, welches mindestens 0,1 Mol, vorzugsweise 0,3 bis 1,5 Mol, Phosphor pro 1000 g der Komponente in Form von weitgehend esterartig gebundenen Phosphorsäuren enthält, wobei im Polyesterharz der im nichtneutralisierten Zustand mit Wasser nicht extrahierbare molare Anteil an Phosphor mindestens 50 %, vorzugsweise mindestens 70 %, beträgt und/oder der Umsatz (p) bei der Veresterung sämtlicher Säuregruppen 70 %, vorzugsweise 80 %, überschreitet, durchführt.

2. Verfahren nach Anspruch 1, dadurch gekennzeichnet, daß man Polyester mit einer Grenzviskositätszahl zwischen 3 und 25 ml/g (DMF, 20 °C) einsetzt.

3. Verfahren nach den Ansprüchen 1 und 2, dadurch gekennzeichnet, daß man die Säuregruppen des Polyesters vor der Polymerisationsstufe entsprechend der Säurezahl teilweise oder vollständig mit Aminen neutralisiert.

4. Verfahren nach den Ansprüche 1 bis 3, dadurch gekennzeichnet, daß die eingesetzte Monomerenzusammensetzung 3 bis 10 Gew.-% (bezogen auf die Gesamtmenge der eingesetzten Monomeren) einer ∝ ,ß-ethylenisch ungesättigten Carbonsäure enthält.   .

5. Verfahren nach den Ansprüchen 1 bis 4, dadurch gekennzeichet, daß man das Mengenverhältnis zwischen Polyesterkomponente und Summe der Monomeren aus den Bereichen 80 : 20 bis 20 : 80 auswählt.

6. Wärmehärtbare, nach partieller oder vollständiger Neutralisation der Säuregruppen mit Basen wasserverdünnbare Lackbindemittel auf der Basis von Schoßpolymerisaten aus ∝ ,ß-ethylenisch ungesättigten Monomeren, dadurch gekennzeichnet, daß die Copolymerisate der Monomeren in einer Lösung in wasserverträglichen organischen Lösungsmitteln eines vorzugsweise gesättigten Polyesterharzes, welches mindestens 0,1 Mol, vorzugsweise 0,3 bis 1,5 Mol, Phosphor pro 1000 g der Komponente in Form von weitgehend esterartig gebundenen Phosphorsäuren enthält, wobei im Polyesterharz der im nichtneutralisierten Zustand mit Wasser nicht extrahierbare molare Anteil an Phosphor mindestens 50 %, vorzugsweise mindestens 70 %, beträgt und/oder der Umsatz (p) bei der Veresterung sämtlicher Säuregruppen 70 %, vorzugsweise 80 %, überschreitet, hergestellt wurden.

7. Wärmehärtbare Lackbindemittel nach Anspruch 6, dadurch gekennzeichnet, daß sie eine Gesamtsäurezahl zwischen 25 und 80 mg KOH/g und eine Grenzviskositätszahl zwischen 15 und 45 ml/g (CHCl₃, 20 °C) aufweisen.

8. Verwendung der gemäß den Ansprüchen 1 bis 5 hergestellten Lackbindemittel für die Formulierung von wasserverdünnbaren Lackzusammensetzungen.

9. Verwendung der gemäß den Ansprüchen 1 bis 5 hergestellten Lackbindemittel für die Formulierung von wasserverdünnbaren Decklacken und Basislacken für Zweischichtdecklacke, dadurch gekennzeichnet, daß die für die Schoßpolymerisation eingesetzten Polyester eine Grenzviskositätszahl zwischen 3 und 15 ml/g (DMF, 20° C) aufweisen.

**10.** Verwendung der gemäß den Ansprüchen 1 bis 5 hergestellten Lackbindemittel in Kombination mit Polymerdispersionen für die Formulierung von Basislacken bei Zweischichtdecklacken.

Patentansprüche für folgende Vertraengsstaaten: ES

**1.** Verfahren zur Herstellung von wärmehärtbaren, nach partieller oder vollständiger Neutralisation der Säuregruppen mit Basen, wasserverdünnbaren Lackbindemitteln durch Schoßpolymerisation von ∝ ,ß-ethylenisch ungesättigten Monomeren, dadurch gekennzeichnet, daß man die Copolymerisation der Monomeren in einer Lösung in wasserverträglichen organischen Lösungsmitteln eines vorzugsweise gesättigten Polyesterharzes, welches mindestens 0,1 Mol, vorzugsweise 0,3 bis 1,5 Mol, Phosphor pro 1000 g der Komponente in Form von weitgehend esterartig gebundenen Phosphorsäuren enthält, wobei im Polyesterharz der im nichtneutralisierten Zustand mit Wasser nicht extrahierbare molare Anteil an Phosphor mindestens 50 %, vorzugsweise mindestens 70 %, beträgt und/oder der Umsatz (p) bei der Veresterung sämtlicher Säuregruppen 70 %, vorzugsweise 80 %, überschreitet, durchführt.

**2.** Verfahren nach Anspruch 1, dadurch gekennzeichnet, daß man Polyester mit einer Grenzviskositätszahl zwischen 3 und 25 ml/g (DMF, 20° C) einsetzt.

**3.** Verfahren nach den Ansprüchen 1 und 2, dadurch gekennzeichnet, daß man die Säuregruppen des Polyesters vor der Polymerisationsstufe entsprechend der Säurezahl teilweise oder vollständig mit Aminen neutralisiert.

**4.** Verfahren nach den Ansprüchen 1 bis 3, dadurch gekennzeichnet, daß die eingesetzte Monomerenzusammensetzung 3 bis 10 Gew.-% (bezogen auf die Gesamtmenge der eingesetzten Monomeren) einer ∝ ,ß-ethylenisch ungesättigten Carbonsäure enthält.

**5.** Verfahren nach den Ansprüchen 1 bis 4, dadurch gekennzeichnet, daß man das Mengenverhältnis zwischen Polyesterkomponente und Summe der Monomeren aus den Bereichen 80 : 20 bis 20 : 80 auswählt.

**6.** Verfahren nach den Ansprüchen 1 bis 5, dadurch gekennzeichnet, daß die erhaltenen Lackbindemittel eine Gesamtsäurezahl zwischen 25 und 80 mg KOH/g und eine Grenzviskositätszahl zwischen 15 und 45 ml/g (CHCl₃,20° C) aufweisen.

**7.** Verwendung der gemäß den Ansprüchen 1 bis 6 hergestellten Lackbindemittel für die Formulierung von wasserverdünnbaren Lackzusammensetzungen.

**8.** Verwendung der gemäß den Ansprüchen 1 bis 6 hergestellten Lackbindemittel für die Formulierung von wasserverdünnbaren Decklacken und Basislacken für Zweischichtdecklacke, dadurch gekennzeichnet, daß die für die Schoßpolymerisation eingesetzten Polyester eine Grenzviskositätszahl zwischen 3 und 15 ml/g (DMF, 20° C) aufweisen.

**9.** Verwendung der gemäß den Ansprüchen 1 bis 6 hergestellten Lackbindemittel in Kombination mit Polymerdispersionen für die Formulierung von Basislacken bei Zweischichtdecklacken.

## Claims

Claims for the following Contracting States: DE, FR, GB, IT, NL, SE

**1.** Process for the preparation of thermosetting paint binders, which can be diluted with water after partial or complete neutralisation of the acid groups with bases, by seed polymerization of α,β-ethylenically unsaturated monomers, characterised in that the copolymerization of the monomers is carried out in a solution in water-compatible organic solvents of a preferably saturated polyester resin which contains at least 0.1 mol, preferably 0.3 to 1.5 mol, of phosphorus per 1000 g of the component in the form of phosphoric acids largely bonded in ester form, the molar proportion of phosphorus in the polyester resin which cannot be extracted with water in the non-neutralized state being at least 50 %, preferably at least 70 %, and/or the conversion (p) on esterification of all the acid groups exceeding 70 %, preferably 80 %.

2. Process according to Claim 1, characterised in that polyesters having an intrinsic viscosity of between 3 and 25 ml/g (dimethylformamide, 20° C) are employed.

3. Process according to Claims 1 and 2, characterised in that the acid groups of the polyester are partly or completely neutralized with amines, according to the acid number, before the polymerization stage.

4. Process according to Claims 1 to 3, characterised in that the monomer composition employed contains 3 to 10 % by weight (based on the total amount of monomers employed) of an $\alpha,\beta$-ethylenically unsaturated carboxylic acid.

5. Process according to Claims 1 to 4, characterised in that the ratio between the amounts of polyester component and the total monomers is chosen from the ranges of 80:20 to 20:80.

6. Thermosetting paint binders which can be diluted with water after partial or complete neutralization of the acid groups with bases and are based on seed polymers of $\alpha,\beta$-ethylenically unsaturated monomers, characterised in that the copolymers of the monomers have been prepared in a solution in water-compatible organic solvents of a preferably saturated polyester resin containing at least 0.1 mol, preferably 0.3 to 1.5 mol, of phosphorus per 1000 g of the component in the form of phosphoric acids largely bonded in ester form, the molar proportion of phosphorus in the polyester resin which cannot be extracted with water in the non-neutralised state being at least 50 %, preferably at least 70 %, and/or the conversion (p) on esterification of all the acid groups exceeding 70 %, preferably 80 %.

7. Thermosetting paint binders according to Claim 6, characterised in that they have a total acid number of between 25 and 80 mg of KOH/g and an intrinsic viscosity of between 15 and 45 ml/g (CHCl₃, 20° C).

8. Use of the paint binders prepared according to Claims 1 to 5 for the formulation of paint compositions which can be diluted with water.

9. Use of the paint binders prepared according to Claims 1 to 5 for the formulation of top coats and base coats which can be diluted with water for two-coat finishes, characterised in that the polyesters employed for the seed polymerization have an intrinsic viscosity of between 3 and 15 ml/g (dimethylformamide, 20° C).

10. Use of the paint binders prepared according to Claims 1 to 5 in combination with polymer dispersions for the formulation of base coats for two-coat finishes.

Claims for the following Contracting State: ES

1. Process for the preparation of thermosetting paint binders, which can be diluted with water after partial or complete neutralisation of the acid groups with bases, by seed polymerization of $\alpha,\beta$-ethylenically unsaturated monomers, characterised in that the copolymerization of the monomers is carried out in a solution in water-compatible organic solvents of a preferably saturated polyester resin which contains at least 0.1 mol, preferably 0.3 to 1.5 mol, of phosphorus per 1000 g of the component in the form of phosphoric acids largely bonded in ester form, the molar proportion of phosphorus in the polyester resin which cannot be extracted with water in the non-neutralized state being at least 50 %, preferably at least 70 %, and/or the conversion (p) on esterification of all the acid groups exceeding 70 %, preferably 80 %.

2. Process according to Claim 1, characterised in that polyesters having an intrinsic viscosity of between 3 and 25 ml/g (dimethylformamide, 20° C) are employed.

3. Process according to Claims 1 and 2, characterised in that the acid groups of the polyester are partly or completely neutralised with amines, according to the acid number, before the polymerization stage.

12

EP 0 245 725 B1

4. Process according to Claims 1 to 3, characterised in that the monomer composition employed contains 3 to 10 % by weight (based on the total amount of monomers employed) of an $\alpha,\beta$-ethylenically unsaturated carboxylic acid.

5. Process according to Claims 1 to 4, characterised in that the ratio between the amounts of polyester component and the total monomers is chosen from the ranges of 80:20 to 20:80.

6. Process according to Claims 1 to 5, characterised in that the paint binders obtained have a total acid number of between 25 and 80 mg of KOH/g and an intrinsic viscosity of between 15 and 45 ml/g ($CHCl_3$, 20°C).

7. Use of the paint binders prepared according to Claims 1 to 6 for the formulation of paint compositions which can be diluted with water.

8. Use of the paint binders prepared according to Claims 1 to 6 for the formulation of top coats and base coats which can be diluted with water for two-coat finishes, characterised in that the polyesters employed for the seed polymerization have an intrinsic viscosity of between 3 and 15 ml/g (dimethylformamide, 20°C).

9. Use of the paint binders prepared according to Claims 1 to 6 in combination with polymer dispersions for the formulation of base coats for two-coat finishes.

**Revendications**

Revendications pour les Etats Contractants suivants: DE, FR, CE, IT, NL, SE

1. Procédé de préparation de liants pour peintures thermodurcissables, diluables à l'eau après neutralisation partielle ou totale des groupes acides à l'aide de bases, par polymérisation ensemencée de monomères $\alpha,\beta$ éthyléniquement insaturés, caractérisé en ce qu'on effectue la copolymérisation des monomères dans une solution dans des solvants organiques compatibles avec l'eau d'une résine de polyester, de préférence saturée contenant au moins 0,1 mole, de préférence 0,3 à 1,5 moles de phosphore pour 1000 g des constituants sous forme d'acides phosphoriques engagés dans une large mesure dans une liaison de type ester, la fraction molaire de phosphore non extractible par l'eau à l'état non neutralisé dans la résine de polyester s'élevant à au moins 50%, de préférence à au moins 70% et/ou le degré de conversion (p) lors de l'estérification de l'ensemble des groupes acides dépassant 70%, de préférence 80%.

2. Procédé selon la revendication 1, caractérisé en ce qu'on met en oeuvre des polyesters ayant un indice de viscosité limite compris entre 3 et 25 ml/g (DMF, 20°C).

3. Procédé selon les revendications 1 et 2, caractérisé en ce que, avant l'étape de polymérisation, on neutralise partiellement ou totalement, selon l'indice d'acide, les groupes acides du polyester avec des amines.

4. Procédé selon les revendications 1 à 3, caractérisé en ce que la composition dé monomères mise en oeuvre contient 3 à 10% en poids (par rapport à la quantité totale des monomères employés) d'un acide carboxylique $\alpha,\beta$ éthyléniquement insaturé.

5. Procédé selon les revendications 1 à 4, caractérisé en ce qu'on choisit la proportion entre les constituants du polyester et la somme des monomères dans les gammes de 80:20 à 20:80.

6. Liants pour peintures thermodurcissables, diluables à l'eau après neutralisation partielle ou totale des groupes acides avec des bases à base de polymères ensemencés obtenus à partir de monomères $\alpha,\beta$ éthyléniquement insaturés, caractérisés en ce que les copolymères des monomères ont été préparés dans une solution dans des solvants organiques compatibles avec l'eau d'une résine de polyester, de préférence saturée contenant au moins 0,1 mole, de préférence 0,3 à 1,5 moles de phosphore pour 1000 g des constituants sous forme d'acides phosphoriques engagés dans une large mesure dans une liaison de type ester, la fraction molaire de phosphore non extractible par l'eau à l'état non neutralisé dans la résine de polyester s'élevant à au moins 50%, de préférence à au moins 70% et/ou le degré

13

de conversion (p) lors de l'estérification de l'ensemble des groupes acides dépassant 70%, de préférence 80%.

7. Liants pour peintures thermodurcissables selon la revendication 6, caractérisés en ce qu'ils présentent un indice d'acide total compris entre 25 et 80 mg de KOH/g et un indice de viscosité limite compris entre 15 et 45 ml/g (CHCl₃, 20°C).

8. Utilisation des liants pour peintures préparés selon les revendications 1 à 5 pour la formulation de compositions de laques diluables à l'eau.

9. Utilisation des liants pour peintures préparés selon les revendications 1 à 5 pour la formulation de laques de finition et de laques de base diluables à l'eau pour laques de finition bicouches, caractérisée en ce que les polyesters mis en oeuvre pour la polymérisation ensemencée présentent un indice de viscosité limite compris entre 3 et 15 ml/g (DMF, 20°C).

10. Utilisation des liants pour peintures préparés selon les revendications 1 à 5 en association avec des dispersions de polymères pour la formulation de laques de base pour laques de finition bicouches.

Revendications pour l'Etat contractant suivant: ES

1. Procédé de préparation de liants pour peintures thermodurcissables, diluables à l'eau après neutralisation partielle ou totale des groupes acides à l'aide de bases, par polymérisation ensemencée de monomères $\alpha,\beta$ éthyléniquement insaturés, caractérisé en ce qu'on effectue la copolymérisation des monomères dans une solution dans des solvants organiques compatibles avec l'eau d'une résine de polyester, de préférence saturée contenant au moins 0,1 mole, de préférence 0,3 à 1,5 moles de phosphore pour 1000 g des constituants sous forme d'acides phosphoriques engagés dans une large mesure dans une liaison de type ester, la fraction molaire de phosphore non extractible par l'eau à l'état non neutralisé dans la résine de polyester s'élevant à au moins 50%, de préférence à au moins 70% et/ou le degré de conversion (p) lors de l'estérification de l'ensemble des groupes acides dépassant 70%, de préférence 80%.

2. Procédé selon la revendication 1, caractérisé en ce qu'on met en oeuvre des polyesters ayant un indice de viscosité limite compris entre 3 et 25 ml/g (DMF, 20°C).

3. Procédé selon les revendications 1 et 2, caractérisé en ce que, avant l'étape de polymérisation, on neutralise partiellement ou totalement, selon l'indice d'acide, les groupes acides du polyester avec des amines.

4. Procédé selon les revendications 1 à 3, caractérisé en ce que la composition de monomères mise en oeuvre contient 3 à 10% en poids (par rapport à la quantité totale des monomères employés) d'un acide carboxylique $\alpha,\beta$ éthyléniquement insaturé.

5. Procédé selon les revendications 1 à 4, caractérisé en ce qu'on choisit la proportion entre les constituants du polyester et la somme des monomères dans les gammes de 80:20 à 20:80.

6. Procédé selon les revendications 1 à 5, caractérisé en ce que les liants pour peintures obtenus présentent un indice d'acide total compris entre 25 et 80 mg de KOH/g et un indice de viscosité limite compris entre 15 et 45 ml/g (CHCl₃, 20°C).

7. Utilisation des liants pour peintures préparés selon les revendications 1 à 6 pour la formulation de compositions de laques diluables à l'eau.

8. Utilisation des liants pour peintures préparés selon les revendications 1 à 6 pour la formulation de laques de finition et de laques de base diluables à l'eau pour laques de finition bicouches, caractérisée en ce que les polyesters mis en oeuvre pour la polymérisation ensemencée présentent un indice de viscosité limite compris entre 3 et 15 ml/g (DMF, 20°C).

9. Utilisation des liants pour peintures préparés selon les revendications 1 à 6 en association avec des dispersions de polymères pour la formulation de laques de base pour laques de finition bicouches.